# EUROPEAN PATENT APPLICATION

(11) **EP 1 533 956 A2**
(43) Date of publication of application: **25.05.2005**
(21) Application number: 04300804.4
(22) Date of filing: 22.11.2004
(51) Int. Cl.: H04L 12/56, H04L 29/06

(54) **Dynamic forwarding of data packets using binary search**

(30) Priority: 24.11.2003 US 718524
(71) Applicant: ALCATEL, 75008 Paris (FR)
(72) Inventor: WILSON, David James, K0A 1L0, Carp (CA)
(74) Representative: Feray, Valérie

(57) **Abstract**

The longest prefix match method of the invention is based on an enhanced look-up combined with a binary search over the hash tables, which results in reduced average and worst-case lookup times. The lookup involves using a sliding window of a fixed size which separates prefixes into groupings, while reducing the number of prefix lengths that need to be searched. Additionally, the order of prefix lengths searched can be tuned based on statistical traffic measurements in order to further reduce the average case lookup.

## Description

### Field of the invention

This invention is directed to data communication networks, and in particular to a method of forwarding data packets using a dynamic binary search on prefix length using hash tables.

### Background of the Invention

As well known, routers are devices which forward messages (data packets) within and between networks on a route towards their final destination. The data packet carries information about the destination node; the router accesses this information, looks into its forwarding (routing, or lookup) tables and directs the message from the port of arrival to an appropriate output port. A routing table indicates, for each possible destination, the next hop to which a PDU (Protocol Data Unit) should be sent.

The Internet is a network of networks that uses common protocols for enabling users from allover the world to communicate with each other. The Internet uses hierarchical logical routing to address a large number of end-systems, arranged into interconnecting networks. To maintain forwarding tables at acceptable sizes an IP address is comprised of a network address (prefix), designating the address of the network used by the end-system, and a host address, designating the address of the end-system's data terminal within its network. For example, all destination addresses in Canada may be stored under prefix Ca*, and the destinations in Ontario, under Ca.On*. Other entries in the forwarding table could be Ca.On.To* for Toronto, or Ca.On.Ott* for Ottawa.

Routers are usually able to make forwarding decisions based only on the network address portion of an IP address, instead of the entire IP address. This allows for an important reduction of the forwarding tables which is obtained by summarizing several address entries under a single prefix, so that a forwarding decision can be made by finding the longest prefix matching (LPM) an address. While this saves memory space, it does not simplify the lookup operation, especially as not all prefixes have the same lengths.

Address lookup and matching is a very complex issue for the current routers. As the size of the forwarding table grows with the number of addresses serviced by the respective router, finding an address match for an incoming message requires looking through a very large number of records, which could take a long time. Furthermore, in the past, Internet addresses have been assigned independently of the topology of the network, and additionally, they cannot be arbitrarily selected to simplify the forwarding lookup, as in the case of ATM VC addresses.

Traditional directory access methods, whether for Internet routing, or for accessing databases used for various types of applications, typically fall into three categories: sorted tables, tree structures and hashing. In a sorted table structure, the entries are sorted by some rule, which allows a particular search strategy (e.g. binary search) to be used to locate entries. Associated with each entry is a pointer to the data, which is the next hop address in the case of a router.

Tree structures use a field from the destination address (key) extracted from the incoming packet (generically called protocol data unit or PDU) to traverse a tree data structure to a "leaf" node, which holds the result of the search (i.e. the next hop for the PDU), or a pointer to the data. Trees offer access times that are proportional to the length of the key, and trade off memory space for search speed. Using more branches at each level of the tree decreases the processing time and number of memory accesses but uses more memory.

Hashing is often used to perform very fast exact match searches. All hashing techniques use a randomizing function to transform the search key into an index into the hash table to locate the pointer to the data (next hop address). As hashing functions are typically one-way, the original key must be stored in its associated entry in the hash table in order to detect hash collisions. Hash tables schemes have good average access costs, requiring often one memory reference to locate an entry, but potentially need additional table accesses to resolve hash collisions.

Some routers make use of a TCAM, which is able to compare, using longest prefix match, a key to every entry in its tables in parallel. Thus a TCAM is able to always find the best match for a key with constant time. TCAMs, however, are costly, and have limited table memory. Hash tables provide an alternative to TCAMs, but are only able to perform parallel searches on entries with the same prefix length. Thus some additional logic is necessary to dictate which prefix lengths to search and in which order.

Presently, the majority of routers forward IPv4 packets, which use an address space of 32 (2⁴) bits. However, this 32 bits address space is becoming insufficient; to alleviate the shortage of IPv4 adresses, an increasing number of routers are forwarding IPv6 packets that use an address space of 128 (2⁶) bits.

The dramatic increase in length of the address field from IPv4 to IPv6 makes it difficult for many existing IPv4 lookup methods to simply scale up to the longer IPv6 address while maintaining acceptable performance. Due to the length of the address, use of the current searching methods would result in an explosion in the size of the routing table data structures, and an increase in the number of memory accesses needed to perform the lookup.

One lookup method that scales well with address length is "scalable high speed routing lookup" described in US Patent 6,018,524. This algorithm performs a binary search on prefix lengths using hash tables. In order to facilitate a binary search with the hash table, markers must be inserted in the hash table to dictate the search order. Markers provide an indication that there is a longer prefix in the table, which could provide a better match, and could also contain the next hop information for a shorter prefix, which would have been found had the current lookup resulted in a miss. These markers can occupy a significant portion of the hash tables. Markers for existing IPv6 routing tables result in a 30-40% increase in the number of hash table entries using this algorithm.

Currently, the majority of existing IPv6 routing tables are sparsely populated, and contain only a small subset of all possible prefix lengths. Thus, using a pure binary search requires searching all 128 prefix lengths when only 20 may actually be present. Therefore, this solution is inefficient for sparsely populated routing tables.

A mutating binary search has been proposed to improve upon the basic binary search. This enhancement allows for prefix lengths, which are known to not contain any matches, due to some portion of the prefix already being matched, to be skipped over from the search. However, this method has limited benefits since this enhancement is only able to make use of the portion of the prefix that has already been matched. Thus, in searches where a series of misses occur before the first match, this enhancement would not take effect until the first match took place.

In short, the existing lookup algorithms do not take advantage of several properties of IPv6 such as hierarchical addressing and sparsely populated routing tables, and as a result will have poor performance for the larger addresses. Furthermore, as routers forward packets at higher speeds, the efficiency of the forwarding method can make a significant impact on the performance of the router. More efficient lookups will allow higher line rates to be achieved, and for greater functionality in routers.

There is a need to provide an address lookup method that efficiently determines on which output router port to forward a packet, and which can be readily used with IPv4, IPv6 and further scaled up, both in terms of key length and number of routes, if need be.

### Summary of the Invention

It is an object of the invention to provide a dynamic forwarding method using a binary search that alleviates totally or in part the drawbacks of the prior art forwarding methods.

It is also an object of the invention to provide an address lookup method that efficiently finds the longest prefix matching an IP address, which may be used with IPv4 and IPv6, and may further be scaled up for other address lengths.

Still another object of the invention is to provide an address lookup method that takes advantage of the hierarchical addressing structure of the IPv6 and that may be dynamically tuned based on real-time statistical traffic data.

Accordingly, the invention provides a method of forwarding protocol data units PDU's in a router with a forwarding hash table, comprising the steps of: a) selecting a window size of *n* window bits and an offset of *o* offset bits; b) generating a grouping table with sets of prefix lengths based on the window size and offset; c) using the *n* window bits as a direct index into the grouping table to find an initial prefix length and provide an associated entry into the hash table; and d) performing a lookup in the hash table based on the initial prefix length for matching the window bits with the bits of at the associated entry.

Also, the invention is directed to a method of forwarding a protocol data unit (PDU) at a router with a forwarding hash table, comprising the steps of dividing the prefix lengths available in the hash table into groups and routing the PDU according to a lookup in the hash table based on the prefix lengths in a selected group of the groups.

According to a further aspect of the invention, a memory for storing data for access by a routing program being executed on a router having a hash table is provided. The memory comprises a prefix length array for storing a grouping table comprising 2ⁿ entries, each entry corresponding to a prefix length available for matching *n* bits of the IP address of a protocol data unit (PDU); and a search area for storing a prefix length search tree constructed using the grouping table based on a lockup in the hash table, the lookup being performed for a prefix length in the grouping table, using the *n* bits in the IP address.

Advantageously, the method according to the invention allows for faster forwarding without much additional cost compared to the existing methods. It enables reducing the number of memory accesses to the routing tables data structures. In a worst case scenario, this method is bounded at log₂(N) serial memory accesses, where N is the number of prefix lengths present in the routing table. This gives 7 memory lookups in the worst case for IPv6. However, the majority of routing tables today would require only 3-4 memory accesses in the worst case, and 1-2 memory accesses on average, without taking into account dynamic reordering of the search order.

In addition, dynamic reordering further reduces the average number of prefix lengths that need to be searched by adjusting the search order. As a result, the method of the invention enables the routers to forward IP packets with lower latency allowing for more functionality to be added to a router. Dynamic reordering is accomplished by allowing for routing table statistics, or real-time traffic measurement statistics, to be used to optimize the search order. Existing analysis of IPv4 traffic patterns suggests that this type of dynamic tuning could result in a significant performance improvement.

On average, memory bandwidth would be improved, compared to the basic binary search algorithm, due to the reduction in the number of prefix lengths requiring searching. However memory bandwidth in the worst case scenario is slightly worse due to the accesses to the grouping table and search order tree. Nonetheless, many of these memory accesses can occur in parallel with hash table lookups, meaning that they do not increase the total latency of the forwarding lookup. Additionally, these accesses are small, and can be to a fast internal/local memory to further shorten their access times.

Another advantage of the method of the invention is that it could be easily implemented in ASICs, FPGAs, GPPs, and NPs. In general, the data path component of the method requires minimal memory when compared to tree-based methods. The control path side of the method varies more between implementations, but the amount of memory required is similar to that of tree-based methods.

Still another advantage of the invention is that the number of markers is reduced to 10% for existing tables, as compared with existing routing tables where the standard binary search results in about a 30% increase in the number of hash table entries due to routes generating markers.

### Brief description of the drawings

The features and advantages of the invention will become more apparent from the following detailed description of the preferred embodiment(s) with reference to the attached diagrams wherein:
**Figure 1** shows an ideal lookup method;
**Figure 2** illustrates the lookup sequence according to an embodiment of the invention;
**Figure 3** shows how the lookup sequence is optimized using traffic statistics;
**Figure 4** is a binary tree representation of a routing table, showing the use of the offset and window according to the invention;
**Figure 5** is a flow chart illustrating the selection of the offset; and
**Figure 6** illustrates the lookup sequence according to another embodiment of the invention.

### Detailed description of the embodiments

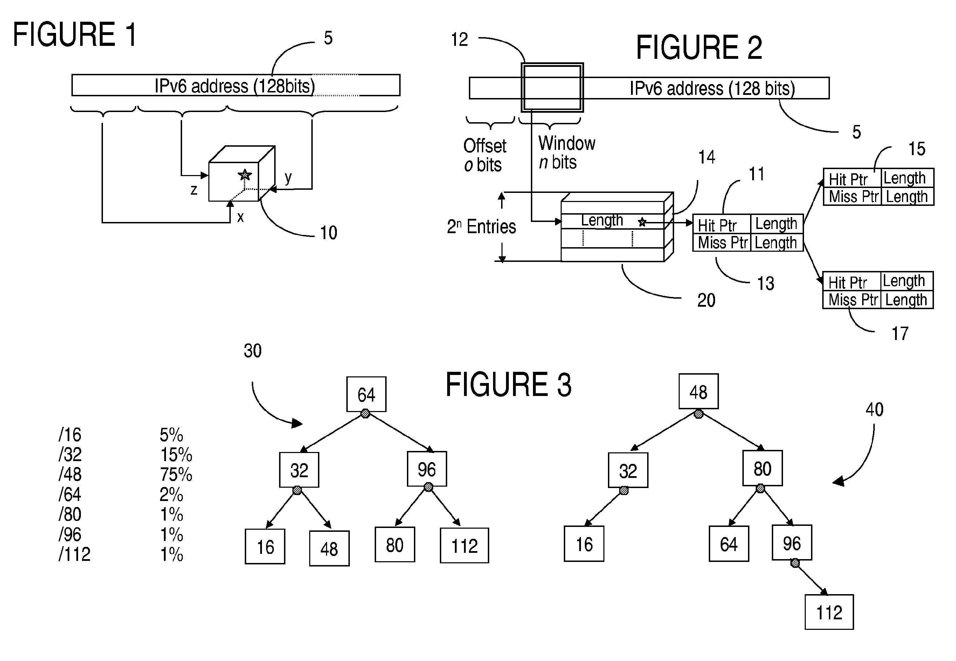

Figure 1 illustrates overall process for the lookup method of the invention. The 2ⁿ bits of the address **5** may be represented as a three-dimensional space **10**, in which each point represents a particular address, and lines, planes and volumes can represent prefixes. To obtain the three-dimensional space **10**, the forwarding address **5** is broken into three parts, not necessarily equal, which are used as the coordinates *x, y,* and *z*. If this three dimensional space were mapped to memory, each point could store a pointer to the next-hop information for that address. This type of lookup would require only one memory access, but unfortunately, the ability to address such a huge address space is currently impossible.

As mentioned previously, this 3D space **10** may also be viewed as being made of volumes, planes, lines and points, each having a unique prefix length (subspaces).To make this lookup more practical, the 3D space could be compressed, forcing subspaces to merge. Instead of using all *k* bits of address **5** to form a set of coordinates as shown in Figure 1, the present invention proposes to use only a selected group, or subset of bits of the IP address. Now, instead of having a 3D space made up of volumes, planes, lines and points, each with a single prefix length, each subspace will contain a set of one or more prefix lengths. In this way, address lookup becomes manageable, since not all address bits are used. Also, by carefully selecting the subset of address bits used, the number of prefix lengths in each aggregated space could be minimized, as shown in Figure 2.

It is important to note that the 16 most significant bits of the IP address **5** are relatively consistent for routes within a routing table. In many tree based algorithms these bits are used to do an initial separation of different prefixes. However, this approach would be fairly inefficient for large addresses such as in IPv6, as this step would in most cases only distinguish between a small set (currently three) of groups of addresses.

While a tree lookup divides similar prefixes into groups and searches based on the prefix, the method according to the invention divides prefix lengths into groups and searches based on the prefix length. Since the first 16 bits are relatively constant for IPv6, and the method searches based on prefix lengths and not the prefix itself, it is possible to select a different grouping of bits, which are not necessarily adjacent to each other in order to search more efficiently.

As shown in Figure 2, a window **12** of size *n* bits and an offset of *o* bits is used to index a grouping table **20** containing an initial search length, and a pointer to a search tree. When a packet arrives, the window bits are extracted using the window size and the offset, and are used as an index into the grouping table **20**. The result of this lookup is an initial prefix length **14** to search in the hash table (not shown). Using this length, a lookup into the hash table is performed to search for a matching prefix of that length, the result of which will determine whether to search longer or shorter prefix lengths. At the same time, the initial hit/miss entry from the search tree associated with the grouping table entry is loaded, as shown at **11** and **13.** This entry will be used to subsequent hash table lookups.

The lookup in the hash table **10** is performed using the number of bits specified by the grouping table lookup, and subsequent hit/miss entries from the search tree. By providing the grouping table **20** in a small memory close to the processor, better latency is achieved by having a first fast lookup to table **20**. When the lookup in table **10** (hash lookup) completes, the result of that will determine which of the two pointers **11, 13** from the hit/miss entry to follow. This will also determine the next prefix length to search. At this point, another hash lookup is performed and another hit/miss entry is loaded, as shown at **15, 17** in Figure 2, etc, until the longest matching prefix is found.

It is clear that a strict binary search is no longer performed. Instead, a binary search of the prefix lengths that could match an address with a given set of window bits is performed. This is accomplished by navigating an, ideally balanced, tree which dictates which prefix length to search for and in which order. In the absolute worst case, where all 128 prefix lengths need to be searched, this tree degenerates into a purely binary search. The search tree may be rearranged in order to trade-off worst case performance for better average case performance.

One of the interesting consequences of having the search order dictated by a tree is that the tree can be reordered to favor certain prefix lengths. Any criteria could be used to tune the search tree such as number of routes for a particular prefix length within a group, or the decision could be based on real-time traffic measurements. This technique is referred to here as dynamic tuning.

Figure 3 shows an example of dynamic tuning, whereby the search sequence is optimized to improve the average case lookup. On the left of Figure 3 is the result of traffic measurement, namely the percentage of search hits for the given prefix lengths. Clearly in this example /48 prefixes represent a majority of the traffic for the router. Unfortunately for a binary search the worst case number of memory accesses is required to match this prefix length. Weighted tree **40** shows how the basic binary tree **30** can be reordered to favor prefix lengths /48, which are used in the example by the majority of traffic. Although the worst case lookup is worse for tree **40**, the statistical average case would be significantly better. In the example, the average lookup for tree **30** (binary search) is 2.79 memory latencies, whereas the statistically optimized search for tree **40** has an average case of 1.36 memory latencies. This is in addition to any benefit already obtained because of the use of the grouping table **20**.

Selection of the window size, *n*, is more of an implementation issue. A larger *n* will result in a better performance; however a larger grouping table would be needed. Preferably, the size of *n* is small enough to result in a grouping table **20** that can fit in a fast memory (cache for general-purpose processors, local memory for a network processor, embedded memory for an ASIC or FPGA, etc). It is also possible to allow for a configurable value of *n*.

Selecting the correct offset *o* for a given window size *n* is key to achieving the best search performance. Window offset selection should be performed in the control path, and the control path maintains a copy of the routing table **10** in a form that is independent from that of the data path.

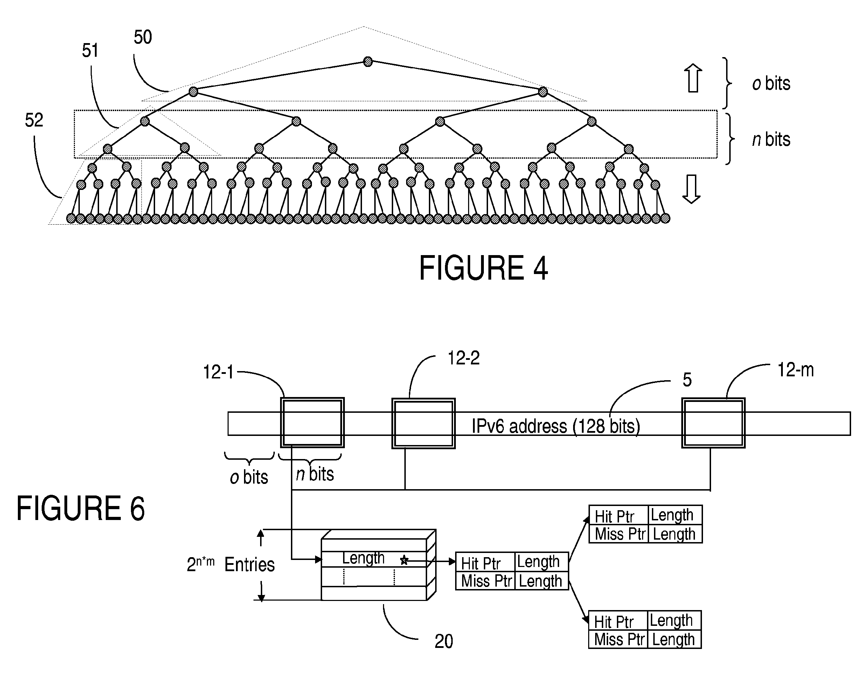

There are numerous ways to determine the ideal offset. The most obvious is to perform a brute force calculation of the worst case number of prefix lengths for a grouping for every possible offset, using every route in the table. A more intelligent method is shown in Figure 4. Here, the routing table **10** is represented as a binary tree with an *n* bit window of offset *o*. For simplicity, we assume that each node of the tree is aware of all the prefix lengths that appear in the sub-tree rooted at that node, and that each node is aware of the *n* bits represented by its *n* parent nodes that fall within the window. This view can be simplified to envision the original tree as a root tree **50** above the window, partial trees **51** within the window and a set of sub-trees **52** rooted at the window.

Thus, the number of prefix lengths that must be searched for a given window and offset is the set union of the prefix lengths appearing in the root tree, the prefix lengths of the sub-trees grouped by the bits falling within the window, and the prefix lengths occurring within the window expanded down to the sub-trees, and again grouped by window bits.

Performing the set union requires iterating over all nodes in the tree within the window. One possible implementation is to build a set of linked lists as the tree is being built. One linked list would be created per level of the tree and as nodes are added to the tree, they would also be added to the linked list for the level of the tree the node was added. Fortunately, the linked list need not be ordered as the entire list will be traversed. This means new nodes can always be added to the head of the list.

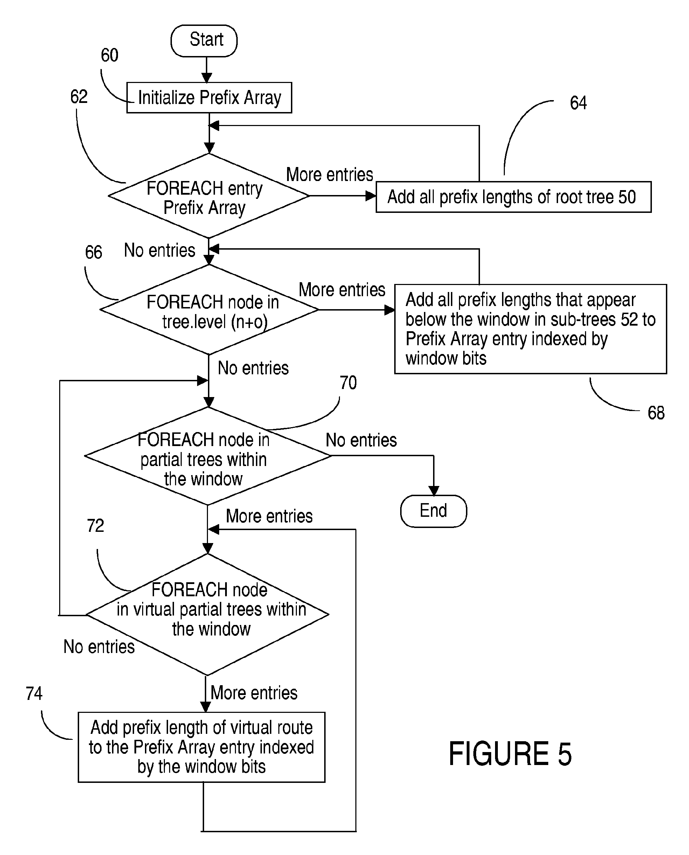

Figure 5 shows, in more detail, the steps performed for selecting the offset *o*. The process involves building a prefix array in order to determine the efficiency of a particular offset. The prefix array is similar to the grouping table, except that instead of having a search tree associated with each entry there is simply a bit-field indicating the prefix lengths for each entry. There are three main steps shown in Figure 5, which correspond to the three regions **50** (root tree), **51** (partial trees) and **52** (sub-trees) shown in Figure 4.

Since the window **12** only uses a finite number of bits from the middle of an address, it is possible that a prefix is so short that none of the bits fall into the window. In this case, the window bits for that prefix could be anything. Thus, all routes which do not have any bits within the window and correspond to root tree **50**, need to be added to every entry in the prefix array. This is shown in steps **62**, **64**.

Steps **66** and **68** refer to all prefix lengths that appear below the window, in sub-trees **52** subtended by the bits of the window **12**. These are the easiest to handle, as their window bits are well known, and also since each node is aware of all the prefix lengths at the sub-tree rooted at itself. Now, for each node that appears at the bottom of the window, all the prefix lengths that appear below the node are added to the index in the prefix array that is indexed by the window bits for that node.

Next, prefix lengths which appear within the window are artificially extended to the lower boundary of the window. This is best illustrated with an example. Suppose that the window has 4 bits, and that the current prefix only uses the top three bits. Let's also assume that the prefix has the window bits 101*, where *could be anything. In this case, two "virtual" window bit combinations need to be created, namely 1010, and 1011. This is illustrated in the flowchart of Figure 5 by steps **70**, **72** and **74**, where block **70** is a loop for every route that appears within the window, and block **72** is for every "virtual" set of window bits for that route. Step **74** provides for adding the prefix length of each "virtual" router to the prefix array entry indexed by the window bits of that "virtual" route.

The prefix array is used to determine the ideal offset of the window. This is done by building the array for several window offsets, and selecting the offset that results in either the lowest average number of prefix lengths for all the entries in the array, or the array in which the entry with the most prefix lengths is minimal. To accelerate the selection of the offset the prefix array calculation for a given offset can be aborted when it is known that the result will be worse than the result for a previously calculated offset.

Once the offset has been selected, the prefix array for that offset is used to build the search trees. This is done by converting each entry in the prefix array into a balanced tree. The reason for using a balanced tree is that it produces a tree that minimizes the total height of the tree, and thus minimizes the number of searches to find an entry in the tree. A weighted tree could be used, instead of a balanced tree, to implement dynamic tuning.

The idea of a sliding window may be extended to a set of sliding windows, as shown in Figure 6. Thus, *m* sliding windows can be used to address an m-dimensional space. Having the ability to select non-consecutive bits allows for much better distribution of prefix lengths throughout the m-dimensional space. This means that fewer bits may need to be used to achieve a uniform distribution of prefix lengths. In turn, fewer bits require a smaller amount of memory to store the n-dimensional space.

The selection of the window size and offset is somewhat costly, but is not required to take place every time a routing update occurs. Instead, *n* and *o* are chosen periodically on a best effort basis. For example, the steps described above in Figure 5 could be performed once at startup and then run as a low priority background. The reason for this is that selecting a new offset will result in a complete rebuilding of the grouping table, search trees, and the hash table as the markers required may change as a result of the search tree being re-balanced. Between major updates, routing modifications would be made such that they result in a minimal number of changes to the grouping table and hash table markers. It is however always possible to add a new route without making any modifications to existing routes and markers.

Insertions and deletions of the routes are fairly straightforward. First, the hash table needs to be updated. This involves either adding or removing the route, followed by any markers that the route made use of that are now unnecessary. The search tree for the group of addresses with the same window bits as that of the updated route may need to be updated if the route is of a new length, or is the last route of a give length. The search order tree may require rebalancing, which could modify the initial prefix length searched that is stored in the grouping table, and require updates to the hash table markers.

Current results show that the method proposed herein is able to reduce the number of prefix lengths to be searched by 50% for a given address using only a one-dimensional table. Furthermore, proper sizing for the hash table allows the method to be used for well over one million IPv6 routes (taking into account that current IPv6 routing tables only contain less than 1,000 IPv6 prefixes). Table 1 provides some experimental results collected for current routing tables, using a window of 8 bits.

**Table 1**

| | Routes | Unique Prefix Lengths | Ideal Window Offset (*o*) | Max. Prefix Lengths Per Group | Avg. Prefix Lengths Per Group | Reduction in Worst Case |
|---|---|---|---|---|---|---|
| Site 1 | 635 | 18 | 17 | 7 | 1.39 | 0.61 |
| Site 2 | 563 | 16 | 19 | 9 | 2.63 | 0.44 |
| Site 3 | 556 | 18 | 15 | 8 | 0.82 | 0.56 |
| Site 4 | 553 | 15 | 21 | 8 | 3.10 | 0.47 |
| Site 5 | 531 | 8 | 9 | 4 | 0.04 | 0.50 |
| Site 6 | 496 | 11 | 15 | 5 | 0.75 | 0.55 |
| Site 7 | 492 | 14 | 17 | 5 | 1.35 | 0.64 |
| Site 8 | 491 | 11 | 15 | 5 | 0.78 | 0.55 |
| Site 9 | 490 | 11 | 15 | 5 | 0.78 | 0.55 |
| Site 10 | 488 | 14 | 15 | 5 | 0.74 | 0.64 |
| Site 11 | 480 | 17 | 21 | 5 | 3.12 | 0.71 |

As indicated previously, algorithms which perform binary searched on hash tables use markers to steer the search towards longer or shorter prefix lengths. With existing routing tables the standard binary search results in about 30% of routes generating markers. With the dynamic forwarding method of the invention the average number of markers is reduced to 10% for existing IPv6 routing tables and synthetic million entry tables. This reduction in markers will result in better hash table performance, which becomes critical as the routing tables become larger.

Also, on average, memory bandwidth is improved due to the reduction in the number of prefix lengths requiring searching. Compared to the basic binary search, the memory bandwidth in the absolute worst case is slightly worse due to the accesses to the grouping table and search order tree. This case would be incredibly rare as it would require a grouping resulting in a group that needed to search every prefix length. Additionally, these structures are small and can be located in a fast memory.

It is also to be noted that instead of providing a search tree in the grouping table, an *n*-bit field (*n* =128 for IPv6) could be returned indicating which prefixes occur for the current group. This field could then be used with another longest prefix match method; depending on the LPM method used, different improvements may be further achieved.

## Claims

1. A method of forwarding protocol data units PDU's in a router with a forwarding hash table, comprising the steps of:
a) selecting a window size of *n* window bits and an offset of *o* offset bits;
b) generating a grouping table with sets of prefix lengths based on said window size and offset;
c) using said *n* window bits as a direct index into said grouping table to find an initial prefix length and provide an associated entry into said hash table; and
d) performing a lookup in said hash table based on said initial prefix length for matching said window bits with the bits of at said associated entry.

2. The method of claim 1, further comprising the steps of:
e) generating one of a hit pointer and a miss pointer in response to said lookup and loading said hit and miss pointers into a binary search tree; and
f) determining a next prefix length for a respective miss pointer and hit pointer; and
g) performing a further lookup in said hash table based on said next prefix length for matching said window bits with the bits of a further associated entry in said hash table.

3. The method of claim 2, further comprising repeating steps e), f) and g) until a longest matching prefix is obtained.

4. The method of claim 3, further comprising forwarding said PDU along a route identified by an IP address in said hash table corresponding to said longest matching prefix.

5. The method of claim 1, wherein step a) comprises selecting said offset such that the maximum number of prefix lengths per set is a minimum.

6. The method of claim 1, wherein said step a) comprises selecting said offset such that the average number of prefix lengths per set is minimized.

7. The method of claim 1, further comprising dynamically tuning the order of prefix lengths searched in said grouping table using statistical data collected at said router,

8. The method of claim 7, wherein said statistical data indicate the hits for each prefix length in each set.

9. The method of claim 7, wherein said lookup is dynamically tuned to process the prefix lengths in the order from the prefix lengths with a greater percentage of hits.

10. The method according to claim 1, wherein said hash table is updated when said window is updated.

11. The method of claim 1, wherein said window is a uni-dimensional window comprising a predetermined number of consecutive bits.

12. The method of claim 1, wherein said window is a multi-dimensional window comprising a predetermined number of groups of consecutive bits.

13. The method of claim 1, wherein the number of bits of said window is selected for enabling said grouping table to fit into a fast memory.

14. The method of claim 1, wherein the window size, n, is user-selectable.

15. The method of claim 1, wherein step a) comprises selecting said offset using said binary tree.

16. The method of claim 1, wherein said binary tree is made up of a root tree generated by said offset bits, partial trees within said window generated by said window bits, and sub-trees subtended by said partial trees.

17. The method of claim 16, wherein the number of prefix lengths searched for said window and said offset is a set union of the prefix lengths in said root tree, the prefix lengths of the sub-trees grouped by said window bits, and the extended prefix lengths occurring within the window grouped by said window bits.

18. The method of claim 17, wherein said set union is obtained by iterating over all nodes of the tree within said window.

19. The method of claim 1, wherein said *n* and *o* are chosen periodically on a best effort basis.

20. The method of claim 1, wherein said *n* and *o* are chosen at router startup, and updated as a low priority background application.

21. A method of forwarding a protocol data unit (PDU) at a router with a forwarding hash table, comprising the steps of:
dividing the prefix lengths available in said hash table into groups; and
routing said PDU according to a lookup in said hash table based on the prefix lengths in a selected group of said groups.

22. The method of claim 21, wherein said step of dividing comprises selecting a set of *n* bits from the IP address of said PDU and arranging said selected group in the form of a grouping table with all prefix lengths available for said *n* bits.

23. The method of claim 22, wherein said step of routing comprises:
using said n bits for finding an initial prefix length in said grouping table, to determine an associated entry into said hash table; and
performing a lookup in said hash table based on said initial prefix length for matching said window bits with the bits of at said associated entry.

24. A memory for storing data for access by a routing program being executed on a router having a hash table, comprising:
a prefix length array for storing a grouping table comprising 2ⁿ entries, each entry corresponding to a prefix length available for matching *n* bits of the IP address of a protocol data unit (PDU); and
a search area for storing a prefix length search tree constructed using said grouping table based on a lockup in said hash table, said lookup being performed for a prefix length in said grouping table, using said *n* bits in said IP address.

25. The memory of claim 24, wherein *n* is selected small enough so that said grouping table fits into a fast memory.

26. The memory of claim 24, wherein said prefix length search tree is constructed based on dynamic flow measurements to favour prefix lengths which are used by the majority of the PDUs at said router.
